# EUROPEAN PATENT APPLICATION

(11) **EP 4 545 293 A1**
(43) Date of publication of application: **30.04.2025**
(21) Application number: 23827262.9
(22) Date of filing: 22.06.2023
(51) Int. Cl.: B32B 27/00, B32B 27/16, B32B 27/20, B32B 27/30

(54) **DECORATIVE SHEET**

(30) Priority: 24.06.2022 JP 2022102023
(71) Applicant: Toppan Holdings Inc., Tokyo 110-0016 (JP)
(72) Inventor: HATTORI, Masashi, Tokyo 110-0016 (JP)
(74) Representative: TBK
(86) International application number: PCT/JP2023/023145
(87) International publication number: WO 2023/249080

(57) **Abstract**

A decorative sheet (1) includes a primary film layer (2); and a surface protection layer (5) disposed on one surface of the primary film layer (2). The surface protection layer (5) has a surface provided with an irregular structure having a plurality of ridged portions protruding in a ridged shape, the irregular structure of the surface protection layer (5) has a ratio of a section height difference Rdc to the thickness t of the surface protection layer (5), the ratio Rdc/t being 0.1 or greater and 0.2 or less, the thickness t of the surface protection layer (5) is 2 µm or more and 18 µm or less, the surface protection layer (5) contains a cured article of a resin and particles, with the particles having an average particle size of 3 µm or more and the particles contained in the surface protection layer (5) in an amount of 3 parts by mass or more and 11 parts by mass or less with respect to 100 parts by mass of the resin, and the surface protection layer (5) has a gloss level less than 10.

## Description

### [Technical Field]

The present invention relates to a decorative sheet.

### [Background Art]

Decorative sheets are used for, for example, the surface decoration of interior or exterior materials such as fittings, furniture, construction materials, and flooring to order to impart design quality and durability to these members. Decorative sheets are typically widely used as decorative plates bonded to the surfaces of substrates such as wood, wooden boards, metal plates, fireproof boards, paper substrates, or resin substrates with an adhesive or the like.

Design quality is imparted by, for example, forming wood-grain or stone-grain patterns using various printing methods. Plain decorative sheets without a pattern may be preferred. The presence or absence of patterns and the types of patterns vary depending on applications and preference.

For the design quality of a decorative sheet, the gloss of the surface is also important. A variety of decorative sheets ranging from mirrorlike, high-gross ones to reflection-free, low gloss ones are selected depending on applications and preference.

As described above, a significant function of decorative sheets along with imparting design quality is to impart durability. Durability is determined by an overall evaluation of scratch resistance, contamination resistance, and whether they are maintained over a long period of time. Although requirements vary depending on the environment and conditions in which decorative sheets are used, decorative sheets having high performance are always in demand.

Durability is typically imparted by forming a surface protection layer on the outermost surface of the decorative sheet. In order to adjust the above-mentioned gloss, in particular, to achieve low gloss, a matting agent (matting additive) is typically added to the surface protection layer.

Furthermore, the decorative sheet is typically subjected to processes such as cutting and bending to form a decorative material such as a decorative board and thus preferred to be processable enough to tolerate these processes.

Such decorative sheets obtained in consideration of design quality (low gloss), scratch resistance, and contamination resistance include, for example, a decorative sheet described in Patent Literature 1.

### [Citation List]

### [Patent Literature]

PTL 1: JP 2019-119138 A

### [Summary of the Invention]

### [Technical Problem]

An object of the present invention is to provide a decorative sheet that gives a moist feel.

### [Solution to Problem]

An aspect of the present invention provides a decorative sheet comprising: a primary film layer; and a surface protection layer disposed on one surface of the primary film layer, in which the surface protection layer has a surface provided with an irregular structure having a plurality of ridged portions protruding in a ridged shape, the irregular structure of the surface protection layer has a ratio of a section height difference Rdc to the thickness t of the surface protection layer, the ratio Rdc/t being 0.1 or greater and 0.2 or less, the thickness t of the surface protection layer is 2 µm or more and 18 µm or less, the surface protection layer contains a cured article of a resin and particles, with the particles having an average particle size of 3 µm or more and the particles contained in the surface protection layer in an amount of 3 parts by mass or more and 11 parts by mass or less with respect to 100 parts by mass of the resin, and the surface protection layer has a gloss level less than 10.

Another aspect of the present invention provides the decorative sheet according to the above aspect, in which the average particle size of the particles is 3 µm or more and 11 µm or less.

Still another aspect of the present invention provides the decorative sheet according to any one of the above aspects, in which the resin is an ionizing radiation-curable resin.

Still another aspect of the present invention provides the decorative sheet according to any one of the above aspects, in which the resin is acrylate.

Still another aspect of the present invention provides the decorative sheet according to any one of the above aspects, in which the resin is trifunctional acrylate having a repeating structure, and the repeating structure has 3 or more and 20 or less repeats.

Still another aspect of the present invention provides the decorative sheet according to any one of the above aspects, in which the resin is tetrafunctional acrylate having a repeating structure, and the repeating structure has 20 or more and 35 or less repeats.

Still another aspect of the present invention provides the decorative sheet according to any one of the above aspects, further comprising: a pattern layer between the primary film layer and the surface protection layer.

Still another aspect of the present invention provides a decorative material comprising: the decorative sheet according to any one of the above aspects; and a substrate to which the decorative sheet is bonded.

### [Advantageous Effects of the Invention]

The present invention enables a decorative sheet that gives a moist feel to be provided.

### [Brief Description of the Drawings]

[Fig. 1] Fig. 1 is a cross-sectional view of a decorative material including a decorative sheet according to an embodiment of the present invention.
[Fig. 2] Fig. 2 is a cross-sectional view of a surface protection layer included in the decorative sheet in Fig. 1.
[Fig. 3] Fig. 3 is a microscope image of the surface protection layer included in the decorative sheet according to an example of the present invention.

### [Description of the Embodiments]

Embodiments of the present invention will now be described with reference to the drawings. The embodiments described below are specific versions of any of the above aspects. The items described below may be incorporated into each of the above aspects singly or in combination.

The embodiments illustrated below are examples for embodying the technical idea of the present invention, and the technical idea of the present invention is not limited by the materials, shapes, and structures of the components described below. The technical idea of the present invention may be modified variously within the technical scope defined by the claims.

Elements having like or similar functions are designated by the same reference numerals in the drawings referred to below, and not described redundantly. The drawings are schematic only, and the relationships between dimensions in one direction and dimensions in another direction and between the dimensions of one member and the dimensions of other members may differ from actual ones.

### <1> Decorative Material and Decorative Sheet

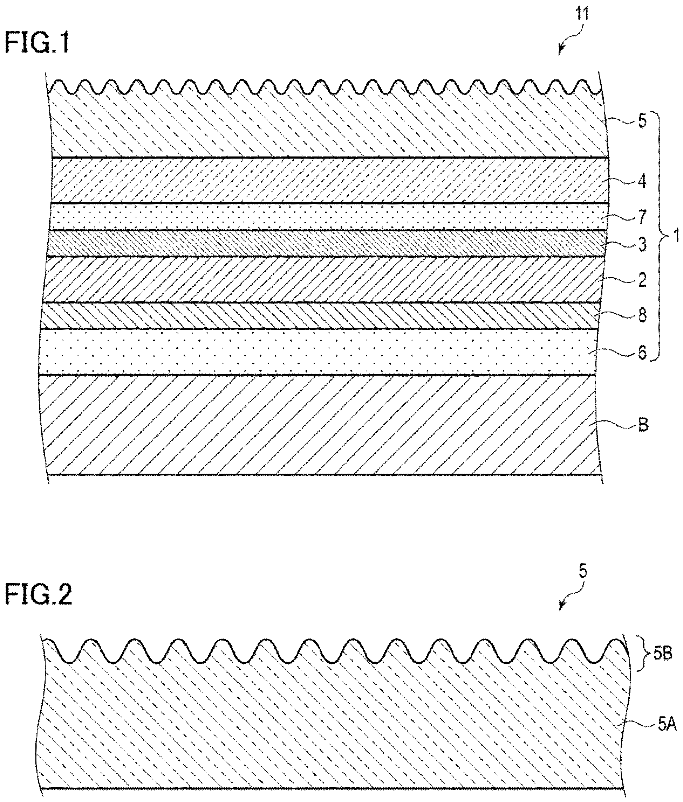

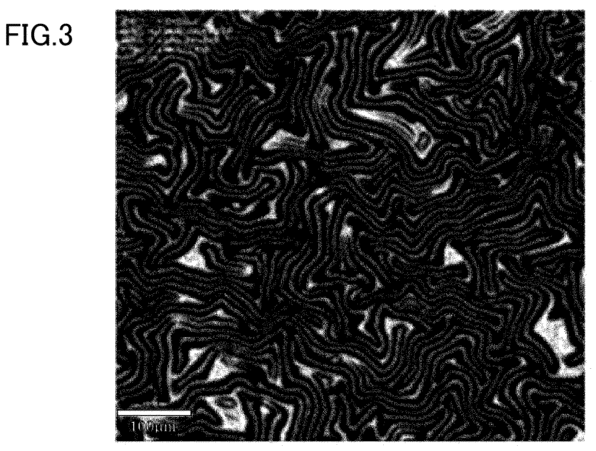

Fig. 1 is a cross-sectional view of a decorative material including a decorative sheet according to an embodiment of the present invention. Fig. 2 is a cross-sectional view of a surface protection layer included in the decorative sheet in Fig. 1. Fig. 3 is a micrograph of the surface protection layer included in the decorative sheet according to an example of the present invention.

The cross section illustrated in Fig. 2 is taken along the thickness direction of the surface protection layer. The micrograph in Fig. 3 is a plan view photograph obtained with a laser microscope (OLS-4000 manufactured by Olympus Corporation).

Fig. 1 illustrates a decorative material 11 including a substrate B and a decorative sheet 1 bonded thereto. Herein, the decorative material 11 is a decorative plate. The decorative plate may be flat, bent, or folded. The decorative material 11 may have a shape other than a plate.

The substrate B here is a plate material. The plate material is, for example, a wooden board, an inorganic board, a metal plate, or a composite plate made from a plurality of materials. The substrate B may have a shape other than a plate.

The decorative sheet 1 includes a primary film layer 2, a pattern layer 3, a transparent resin layer 4, a surface protection layer 5, an adhesive layer 7, a primer layer 6, and a concealing layer 8. The pattern layer 3, the adhesive layer 7, the transparent resin layer 4, and the surface protection layer 5 are stacked in this order from the primary film layer 2 on the surface of the primary film layer 2 facing away from the substrate B. The concealing layer 8 and the primer layer 6 are stacked in this order from the primary film layer 2 on the surface of the primary film layer 2 facing the substrate B. One or more of the pattern layer 3, the transparent resin layer 4, the primer layer 6, the adhesive layer 7, and the concealing layer 8 may be omitted. The components included in the decorative sheet 1 will now be described one by one.

### <1.1> Primary Film Layer

The primary film layer 2 or its materials may be any material selected from, for example, paper, a synthetic resin, a foam of a synthetic resin, rubber, nonwoven fabric, synthetic paper, or a metallic foil. Examples of the paper include tissue paper, titanium paper, and resin-impregnated paper. Examples of the synthetic resin include polyethylene, polypropylene, polybutylene, polystyrene, polycarbonate, polyester, polyamide, an ethylene-vinyl acetate copolymer, polyvinyl alcohol, and acrylic. Examples of the rubber include ethylene-propylene copolymer rubber, ethylene-propylene-diene copolymer rubber, styrene-butadiene copolymer rubber, styreneisoprene-styrene block copolymer rubber, styrene-butadiene-styrene block copolymer rubber, and polyurethane. As the nonwoven fabric, organic or inorganic nonwoven fabric may be used. Examples of the metal of the metal foil include aluminum, iron, gold, and silver.

In consideration of printing workability and costs, the primary film layer 2 preferably has a layer thickness in the range of 20 µm or more and 250 µm or less.

### <1.2> Primer Layer

When an olefinic resin is used as a material for the primary film layer 2, the surface of the primary film layer 2 is often inert. In this case, the primer layer 6 is thus preferably interposed between the primary film layer 2 and the substrate B. When the primary film layer 2 is made from an olefinic material, the primer layer 6 may be omitted, and in order to improve adhesion between the primary film layer 2 and the substrate B, the primary film layer 2 may be subjected to a surface modification treatment such as a corona treatment, a plasma treatment, an ozone treatment, an electron beam treatment, an ultraviolet light treatment, or a bichromate treatment.

The primer layer 6 may be formed from materials such as materials described later for the pattern layer 3. The primer layer 6 is provided on the rear surface of the decorative sheet 1, and therefore in consideration of the decorative sheet 1 being wound in a web shape, an inorganic filler may be added to the primer layer 6 to avoid blocking and increase adhesion to an adhesive. Examples of the inorganic filler include silica, alumina, magnesia, titanium oxide, and barium sulfate.

### <1.3> Concealing Layer

Concealment for the substrate B is imparted to the decorative sheet 1 by, for example, using a colored sheet as the primary film layer 2 or disposing an opaque concealing layer 8. The concealing layer 8 may be formed from, for example, the same materials described later for the pattern layer 3. However, since the concealing layer 8 is provided for the purpose of concealment, a pigment preferably used is, for example, an opaque pigment, titanium oxide, or iron oxide. In order to enhance the concealment, a metal such as gold, silver, copper, or aluminum may also be added to the materials for the concealing layer 8. Typically, aluminum flakes are added.

### <1.4> Pattern Layer

The pattern layer 3 is a layer obtained by printing a pattern on the primary film layer 2 using ink. For example, nitrocellulose, cellulose, a vinyl chloride-vinyl acetate copolymer, polyvinyl butyral, polyurethane, acrylic, polyesters, or modified products thereof may be used singly or in combination as an ink binder. The binder may be any of an aqueous binder, a solvent-based binder, and an emulsion binder and may be a one-part binder or a two-part binder including a curing agent. The pattern layer 3 may be formed by a method for curing a layer of curable ink by irradiation with ultraviolet light, an electron beam, or the like. Among others, the most typical method is the use of a urethane-based ink cured by isocyanate. In addition to the binder, the ink used to form the pattern layer 3 may further contain, for example, a coloring agent such as a pigment or a dye, an extender pigment, a solvent, and various additives contained in general ink. Examples of highly versatile pigments include condensed azo pigments, insoluble azo pigments, quinacridones, isoindolines, anthraquinones, imidazolones, cobalt, phthalocyanines, carbon, titanium oxide, iron oxide, and pearl pigments such as mica.

Besides the application of ink, it is also possible to apply a design to the pattern layer 3 by vapor deposition or sputtering of various metals. In particular, the ink preferably has a photostabilizer added thereto. This addition can suppress degradation of the decorative sheet 1 itself caused by photodegradation of ink and prolong the life of the decorative sheet 1.

### <1.5> Adhesive Layer

The adhesive layer 7 is a layer also called a heat-sensitive adhesive layer, an anchor coat layer, or a dry lamination adhesive layer.

The resin material for the adhesive layer 7 is not limited to a particular one, and can be appropriately selected for use from, for example, an acrylic, polyester-based, polyurethane-based, or epoxy-based resin material. Alternatively, as the resin material for the adhesive layer 7, for example, an ethylene-vinyl acetate copolymer resin-based adhesive can also be used. The coating method can appropriately be selected according to, for example, the viscosity of the adhesive. Gravure coating is typically used, and the adhesive layer 7 is formed on the top of the pattern layer 3 by gravure coating and then laminated with the transparent resin layer 4. The adhesive layer 7 may be omitted when sufficient adhesion strength is achieved between the transparent resin layer 4 and the pattern layer 3.

### <1.6> Transparent Resin Layer

A suitable resin material for the transparent resin layer 4 is an olefinic resin. Examples of the olefinic resin include, besides polypropylene, polyethylene, polybutene, and the like, homopolymers of α-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene) or copolymers of two or more of the α-olefins, and copolymers of ethylene or an α-olefin with another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, and an ethylene-butyl acrylate copolymer.

In order to improve the surface strength of the decorative sheet 1, highly crystalline polypropylene is preferably used as the resin of the transparent resin layer 4. To the transparent resin layer 4, various additives can be added as necessary, such as a thermal stabilizer, a photostabilizer, an anti-blocking agent, a catalyst scavenger, a coloring agent, a light scattering agent, and a gloss adjuster. The thermal stabilizer is typically added in any combination between, for example, phenol-based, sulfur-based, phosphorus-based, and hydrazine-based thermal stabilizers, and the photostabilizer is typically added in any combination between hindered amine-based photostabilizers.

### <1.7> Surface Protection Layer

The surface protection layer 5 includes a core portion 5A and a plurality of ridged portions 5B protruding in a ridged pattern from one surface of the core portion 5A. The ridged portions 5B form an irregular structure.

In the decorative sheet 1 according to the present embodiment, the ridged pattern refers to the shape of protrusions that are lines in plan view. The ridged portions 5B may have a curved or linear shape in plan view, but is preferably curved from the viewpoint of fingerprint resistance on the decorative sheet 1. Each of the ridged portions 5B may or may not branch in plan view. In the present disclosure, for example, the ridged portions 5B constitute a part from the bottom to the top of the irregular shape formed in the surface of the surface protection layer 5, and the core portion 5A refers to the part of the surface protection layer 5 except the ridged portions 5B.

The ridged portions 5B are, for example, each curved as illustrated in Fig. 3, and at least some of them are adjacent to each other in the width direction. Along at least some of the ridged portions 5B adjacent to each other in the width direction, as illustrated in Fig. 2, the part having an irregular structure has a waveform such as a sinusoidal shape in a cross section of the surface protection layer 5 parallel with the width direction and the thickness direction of the surface protection layer 5.

In the irregular structure of the surface protection layer 5, the ratio of the section height difference Rdc to the thickness t of the surface protection layer 5, Rdc/t (hereinafter simply also referred to as the ratio Rdc/t), is 0.1 or greater an 0.2 or less. The ratio Rdc/t is preferably 0.11 or greater and 0.19 or less.

The section height difference Rdc is a surface texture parameter defined in JIS B 0601-2013. The section height difference Rdc indicates a section height difference in a roughness curve, representing the steepness of the irregular shape. Herein, the position of the highest peak of the roughness curve is defined as the reference level of the section height level c. Herein, c (Rmr1) refers to the section height level at which the material ratio Rmr for the roughness curve is 10%, and c (Rmr2) refers to the section height level at which the material ratio Rmr for the roughness curve is 25%. The section height difference Rdc (µm) in the roughness curve is the difference between the section height level c (Rmr1) and the section height level c (Rmr2). When the section height difference Rdc is divided by the thickness t of the surface protection layer 5 to determine the ratio Rdc/t, the steepness of the irregular shape per unit thickness of the surface protection layer 5 can be represented.

Of the surface of the surface protection layer, the area corresponding to the part in which the material ratio Rmr for the roughness curve is less than 10% is the first area touched by a fingertip when the surface protection layer is pressed with the fingertip. A moist feel is little influenced by the first surface area of the surface protection layer touched by a fingertip when the surface protection layer is pressed with the fingertip. A moist feel is also little influenced by the first surface area of the surface protection layer touched by a fingertip when the pressure applied from the fingertip to the surface protection layer is considerably increased. A moist feel is significantly influenced by the slope of the first surface area of the surface protection layer touched by a fingertip when the pressure applied from the fingertip to the surface protection layer is moderately increased. This area corresponds to the part in which the material ratio Rmr for the roughness curve falls within the range of 10% to 25%.

When the value of the ratio Rdc/t is 0.1 or greater and 0.2 or less, the irregular shape has a relatively gentle slope. In this case, when a finger is slid on the surface of the decorative sheet while pressing the surface, the pressing resistance due to the contact between the finger and the surface is small, and the contact area between the finger and the protrusions increases gradually, so that the surface of the decorative sheet provides a feel as though the surface adheres to the finger. This feel can be associated with a moist feel.

In contrast, when the ratio Rdc/t is greater than 0.2, the slope of the irregular shape steepens. In this case, when a finger is slid on the surface of the decorative sheet while pressing the surface, the pressing resistance due to the contact between the finger and the surface is great, so that the presence of irregularities is felt. This feel can be associated with a rough feel.

When the ratio Rdc/t is less than 0.1, the irregular shape has a significantly gentle slope. In this case, when a finger is slid on the surface of the decorative sheet while pressing the surface, the pressing resistance due to the contact between the finger and the surface is small, the contact area between the finger and the protrusions is large at the start of the pressing, and the increase in the contact area by the pressing is significantly gentle. Thus, in this case, the decorative sheet provides a feel as though the surface adheres to the finger, while the significantly gentle slope of the irregular shape provides a feel smoother the above-described moist feel, and as a whole, the decorative sheet gives a strong impression of smoothness. This feel can be associated with a smooth feel.

The thickness t of the surface protection layer 5 is 2 µm or more and 18 µm or less. The thickness t of the surface protection layer 5 is preferably 3 µm or more and 10 µm or less. As the thickness of the surface protection layer 5 increases, the value of the ratio Rdc/t tends to increase. Accordingly, a surface protection layer 5 that is too thin or too thick makes it difficult to achieve a moist feel. A surface protection layer 5 that is thinner makes it more difficult to achieve a low gloss level. The thickness of the surface protection layer 5 is determined by observing a cross section with a scanning electron microscope and averaging 25 points. Specifically, the thickness of the surface protection layer 5 can be determined as described in Examples later. When the surface protection layer coating solution described later contains no solvent, the coating film made from the surface protection layer coating solution has the same thickness as the thickness of the surface protection layer 5.

The surface protection layer 5 contains a cured article of a resin and particles. The resin contained in the surface protection layer 5 is preferably an ionizing radiation-curable resin. The ionizing radiation herein refers to a charged particle beam such as an electron beam. The ionizing radiation-curable resin is cured by the irradiation with ionizing radiation. The ionizing radiation-curable resin may also be cured by the irradiation with ultraviolet light. The ionizing radiation-curable resin used herein is cured by the irradiation with light with a wavelength of 200 nm or less and also has a high absorption coefficient for this light.

The amount of the cured product of the ionizing radiation-curable resin in the surface protection layer 5 is preferably 60% by mass or more, more preferably 70% by mass or more, and still more preferably 80% by mass or more. As the ionizing radiation-curable resin, known resins such as various monomers and commercially available oligomers can be used, and examples of known resins that can be used include (meth)acrylic resins, silicone-based resins, polyester-based resins, urethane-based resins, amide-based resins, and epoxy-based resins. The ionizing radiation-curable resin may be either an aqueous resin or a non-aqueous (organic solvent-based) resin.

The main component of the ionizing radiation-curable resin is preferably acrylate. As used herein, the main component of the ionizing radiation-curable resin means a component accounting for 60% by mass or more of the ionizing radiation-curable resin. The ionizing radiation-curable resin preferably contains acrylate in an amount of 70 parts by mass or more, and more preferably 80 parts by mass or more. The ionizing radiation-curable resin is more preferably acrylate.

The acrylate is preferably bifunctional or higher acrylate and more preferably trifunctional or higher acrylate. To obtain the surface protection layer 5 having high scratch resistance, the acrylate is preferably trifunctional or higher. Although there is no upper limit to the number of functional groups in the acrylate, in one example, the acrylate is hexafunctional or lower.

The acrylate preferably has a repeating structure. The repeating structure is, for example, any of an ethylene oxide (EO) structure, a propylene oxide (PO) structure, and an ε-caprolactone (CL) structure. The repeating structure is preferably ethylene oxide or propylene oxide. In the acrylate, the above-described repeating structure may be interposed in a ring-open state between acryloyl and methylol.

The repeating structure preferably has three or more repeats. The use of acrylate having a large number of repeats increases the likelihood that the cured film will expand in an in-plane direction in the first irradiation step described later, and accordingly wrinkles corresponding to the ridged portions 5B are likely to occur in the surface of the coating film. The use of acrylate having a larger number of repeats also tends to increase the value of the ratio Rdc/t. However, as the number of repeats increases, the crosslink density decreases, and also the surface protection layer decreases in scratch resistance.

In a preferred embodiment, the ionizing radiation-curable resin is a trifunctional acrylate having a repeating structure. The trifunctional acrylate having a repeating structure is, for example, EO-modified, PO-modified, or CL-modified trimethylolpropane triacrylate, glycerin triacrylate, isocyanurate triacrylate, or pentaerythritol triacrylate. In the trifunctional acrylate having a repeating structure, the repeating structure preferably has three or more repeats, more preferably 3 or more and 30 or less repeats, and still more preferably 3 or more and 20 or less repeats.

In another preferred embodiment, the ionizing radiation-curable resin is a tetrafunctional acrylate having a repeating structure. The tetrafunctional acrylate having a repeating structure is, for example, EO-modified, PO-modified, or CL-modified pentaerythritol tetraacrylate. In the tetrafunctional acrylate having a repeating structure, the repeating structure preferably has 12 or more repeats, more preferably 12 or more and 50 or less repeats, and still more preferably 20 or more and 50 or less repeats, and yet still more preferably 20 or more and 35 or less repeats.

The number of repeats in the above-described repeating structure can be analyzed by MALDI-TOF-MS. The ionizing radiation-curable resin may have a molecular weight distribution. When the resin has a molecular weight distribution, the number of repeats corresponds to the molecular weight at the highest peak in a MALDI-TOF-MS mass spectrum.

Examples of the particles contained in the surface protection layer 5 include particles made from organic materials such as polyethylene (PE) wax, polypropylene (PP) wax, and resin beads or particles made from inorganic materials such as silica, glass, alumina, titania, zirconia, calcium carbonate, and barium sulfate.

The particles have an average particle size (D50) of 3 µm or more. The average particle size (D50) of the particles is preferably 3 µm or more and 11 µm or less, and more preferably 4 µm or more and 10 µm or less.

A surface protection layer 5 containing particles enables the surface of the coating film undergo more uniform wrinkling in the first irradiation step described later. As the average particle size (D50) of the particles increases, the value of the ratio Rdc/t tends to decrease. Accordingly, an average particle size (D50) that is too small or too large makes it difficult to achieve a moist feel. When large particles are used, the particles may easily detach from the surface protection layer 5, making it difficult to achieve high scratch resistance. Small particles are less effective in generating uniform wrinkles.

As used herein, the average particle size (D50) may be a median diameter (D50) measured by a laser diffraction/scattering particle size distribution analyzer. When the surface protection layer coating solution contains particles, the surface protection layer 5 obtained from the coating solution also contains the particles. The average particle size of the particles contained in the surface protection layer 5 may be a value obtained by actually measuring and averaging the particle sizes of multiple particles through cross-section observation. The value thus obtained is substantially the same value as the median diameter (D50) measured by a laser diffraction/scattering particle size distribution analyzer. Thus, the above-described range of the average particle size may also be read as the range of the average particle size of the particles contained in the surface protection layer 5.

The particles are contained in the surface protection layer 5 in an amount of 3 parts by mass or more and 11 parts by mass or less with respect to 100 parts by mass of the resin. The particle content is preferably 4 parts by mass or more and 10 parts by mass or less with respect to 100 parts by mass of the resin. The term "100 parts by mass of the resin" refers to the parts by mass of the resin solids.

The particle content within the above-described range is particularly effective in generating uniform wrinkles. As the particle content increases, the value of the ratio Rdc/t tends to decrease. Thus, a particle content that is too low or too high makes it difficult to achieve a moist feel. When the particle content is high, the particles may easily detach from the surface protection layer 5, making it difficult to achieve high scratch resistance. When the particle content is low, the particles are less effective in generating uniform wrinkles.

The surface protection layer 5 has a gloss level less than 10.0. The surface protection layer 5 preferably has a gloss level of 5 or less. As used herein, the term "gloss level" is a measurement value obtained by measurement using a gloss meter in conformity with JIS Z 8741-1997, with an incidence angle of 60 degrees.

### <2> Method for Producing Decorative Sheet

The decorative sheet 1 is produced by, for example, the following method. For simplicity, the pattern layer 3, the transparent resin layer 4, the primer layer 6, the adhesive layer 7, and the concealing layer 8 will not be described.

First, a coating film made from the surface protection layer coating solution is formed over one surface of the primary film layer 2. The coating film can be formed by various printing methods such as gravure printing, offset printing, screen printing, electrostatic printing, and inkjet printing or various coating methods such as roll coating, knife coating, micro-gravure coating, or die coating.

The surface protection layer coating solution contains the above-described resin and the above-described particles. The surface protection layer coating solution may further contain a solvent or additives for improving the capability of the final product, such as an antibacterial agent and a fungicide. The surface protection layer coating solution may further contain other additives such as an ultraviolet absorber and a light stabilizer. Examples of usable ultraviolet absorbers include benzotriazole-based, benzoate-based, benzophenone-based, and triazine-based agents. Examples of usable light stabilizers include hindered amine-based agents. The method described here can form the surface protection layer 5 with a low gloss level without a gloss adjuster (matting additive).

When the entire coating film made from the surface protection layer coating solution is cured with ultraviolet radiation in the second irradiation step described later, the surface protection layer coating solution preferably further contains a photoinitiator. Examples of the photoinitiator include, but are not limited to, benzophenone-based, acetophenone-based, benzoin ether-based, and thioxanthone-based photoinitiators.

After the coating film made from the surface protection layer coating solution is formed, the first irradiation step is performed. In the first irradiation step, the coating film is irradiated with light with a wavelength of 200 nm or less (hereinafter referred to as the first radiation). The ionizing radiation-curable resin contained in the surface protection layer coating solution has a high absorption coefficient for the first radiation. Therefore, the first radiation incident on the coating film can reach a position of only tens to hundreds of nanometers below the outermost surface. Thus, in the first irradiation step, cross-linking reactions proceed in the surface area of the coating film to form an ultrathin cured film, whereas the other areas remain uncured because cross-linking reactions do not proceed.

The coating film after the first irradiation step has wrinkles in its surface that correspond to the ridged portions 5B. The present inventors believe that the surface of the coating film wrinkles in the first irradiation step for the following reasons.

As described above, the first radiation can reach a position of only tens to hundreds of nanometers below the outermost surface of the coating film. That is, the ionizing radiation-curable resin cross-links only in the surface of the coating film, and the areas deeper than tens to hundreds of nanometers below the outermost surface are uncured and have highly fluid molecules. Such highly fluid molecules swell the cured film to increase the volume of the cured film. In response to the in-plane compressive stress generated when the volume increases in an in-plane direction, the cured film buckles causing wrinkles in the surface of the coating film.

The first radiation can be extracted from excimer vacuum ultraviolet (VUV) light. The excimer VUV light can be produced from a lamp that uses a noble gas or a noble gas halide compound. When a lamp with a noble gas or a noble gas halide compound gas sealed therein is externally provided with high energy electrons, the lamp generates a large amount of discharge plasma (dielectric barrier discharge). This plasma discharge excites atoms of the discharge gas (noble gas) and instantaneously converts them into an excimer state. When the atoms return from the excimer state to the ground state, light having a wavelength in a range specific to that excimer is emitted.

The gas used for the excimer lamp may be any conventionally used gas as long as the gas causes emission of light at 200 nm or less. As the gas, a noble gas such as Xe, Ar, or Kr, or a mixed gas of a noble gas with a halogen gas, such as ArBr or ArF, can be used. The excimer lamp emits light of different wavelengths (center wavelengths) depending on the gas, such as about 172 nm (Xe), about 126 nm (Ar), about 146 nm (Kr), about 165 nm (ArBr), and about 193 nm (ArF).

In consideration of the magnitude of photon energy and the difference between the wavelength and the bond energy of organic matter, a xenon lamp that emits excimer light having a center wavelength of 172 nm is preferably used as a light source. Also in consideration of facility maintenance costs, material availability, and the like, a xenon lamp is preferably used as a light source.

The first irradiation step is performed under an atmosphere having a low oxygen concentration. Oxygen has a high absorption coefficient for light at 200 nm or less. Thus, the first irradiation step is preferably performed, for example, under a nitrogen gas atmosphere. The oxygen concentration of the gas phase in the first irradiation step, or the concentration of the residual oxygen in the reactive atmosphere, is preferably 2,000 ppm or less, and more preferably 1,000 ppm or less.

The oxygen in the atmosphere inhibits radical polymerization. Thus, the concentration of residual oxygen in the reactive atmosphere influences wrinkling in the surface of the coating film. Thus, when the concentration of the residual oxygen in the reactive atmosphere is changed, the surface texture of the surface protection layer 5 may change.

The integrated light intensity of the first radiation is preferably 0.5 mJ/cm² or more and 200 mJ/cm² or less, more preferably 1 mJ/cm² or more and 100 mJ/cm² or less, still more preferably 3 mJ/cm² or more and 50 mJ/cm² or less, and most preferably 5 mJ/cm² or more and 30 mJ/cm² or less. When the integrated light intensity is reduced, the expansion of the cured film in an in-plane direction is reduced. When the integrated light intensity is increased, the surface state of the coating film deteriorates.

After the first irradiation step is ended, the second irradiation step is performed. In the second irradiation step, the coating film is irradiated with second radiation to cure the entire coating film. As a result, the surface protection layer 5 is obtained.

The second radiation is ionizing radiation such as an electron beam or ultraviolet radiation having a wavelength longer than the first radiation. When ultraviolet radiation is used as the second radiation, the ultraviolet radiation is to have a wavelength for which the ionizing radiation-curable resin exhibits a smaller absorption coefficient.

The integrated light intensity of the second radiation is preferably 10 mJ/cm² or more and 500 mJ/cm² or less, more preferably 50 mJ/cm² or more and 400 mJ/cm² or less, and still more preferably 100 mJ/cm² or more and 300 mJ/cm² or less.

The decorative sheet 1 can be produced by, for example, the foregoing method. The decorative sheet 1 may also be produced by another method. For example, the method described above for the surface protection layer 5 may be used to form a plate, and this plate may be used for transfer to form the surface protection layer 5 having an irregular structure in its surface.

### <3> Advantageous Effects

In the decorative sheet 1 described with reference to Figs. 1 to 3, the surface protection layer 5 has the above-described surface texture. The decorative sheet 1 provides a user with a moist feel when the user slides a finger on the surface of the surface protection layer 5 while pressing the surface with the skin, for example, when the user slides a finger on the surface of the surface protection layer 5 while pressing the surface with the finger. That is, since the irregular shape of the surface of the surface protection layer 5 has a relatively gentle slope, the decorative sheet 1 allows the touch during the above action to gradually increase the contact area between the finger and the protrusions without increasing the small pressing resistance caused by the contact between the finger and the surface. This provides a feel as though the surface of the decorative sheet adheres to the finger.

The moist feel can give comfort and warmth to a person who touches the decorative sheet 1. The moist feel can also add a sense of luxury to the decorative sheet 1. Thus, the decorative sheet 1 that provides the user with a moist feel is suitable for uses where the sheet is frequently in contact with the user's skin or the sheet is in contact with the user's skin for a long time, such as uses for the top of a desk, the armrests of a chair, and the handrails of stairs and passageways.

The surface protection layer 5 of the decorative sheet 1 has the above-described surface texture and can thus achieve a low gloss level without containing a gloss adjuster (matting additive). Because a gloss adjuster reduces the oil repellency of a layer formed from a resin material, the surface protection layer 5 containing a gloss adjuster is prone to fingerprints. A surface protection layer 5 containing no gloss adjuster is less likely to absorb oil and thus resistant to fingerprints. In addition, a surface protection layer 5 having high oil repellency is less likely to be oil-stained or adsorb contaminants. Furthermore, a surface protection layer 5 containing no gloss adjuster causes no gloss adjuster particles to become detached when the surface is scratched, and accordingly, the decorative sheet 1 including the surface protection layer 5 is less likely to change in gloss or receive a scratch.

The surface protection layer 5 having the above-described surface texture can be obtained by the above-described method for the following reasons.

The oxygen in the gas phase absorbs short-wavelength ultraviolet radiation and also inhibits radical polymerization. In the coating film made from the ionizing radiation-curable resin, the influence of the oxygen in the gas phase on radical polymerization is greatest in the area adjacent to the gas phase and decreases as distance from the surface of the coating film increases. Therefore, in the first irradiation step, the oxygen concentration of the gas phase can be varied to change the relationship between distance from the surface of the coating film and the progress of cross-linking reactions.

The change in this relationship also changes the thickness of the cured film formed on the surface of the coating film in the first irradiation step and the degree of the expansion of the cured film in the in-plane direction that depends on the progress of cross-linking reactions. The thickness of the cured film and the degree of the expansion of the cured film in the in-plane direction are also influenced by the integrated light intensity in the first irradiation step. The thickness of the cured film and the degree of the expansion of the cured film in the in-plane direction influence the surface texture of the surface protection layer. Furthermore, the size and amount of the particles contained in the coating film and the thickness of the coating film also influence wrinkling.

Thus, for example, the composition of the ionizing radiation-curable resin, the size and amount of the contained particles, the thickness of the coating film, the oxygen concentration of the gas phase in the first irradiation step, and the integrated light intensity in the first irradiation step can appropriately be determined to obtain a surface protection layer having a desired surface texture.

### Examples

Examples of the present invention will be described below.

### <Example 1>

The decorative sheet 1 described with reference to Figs. 1 to 3 was produced by the following method. In this example, the transparent resin layer 4, the primer layer 6, the adhesive layer 7, and the concealing layer 8 were omitted.

First, impregnated paper having a basis weight of 50 g/m² (GFR-506 manufactured by Kohjin Co., Ltd.) was prepared as the primary film layer 2. On one surface of the primary film layer 2, the pattern layer 3 was formed with gravure printing ink based on oil-based nitrocellulose resin (each color of PCNT (PCRNT) manufactured by Toyo Ink Co., Ltd.).

Next, the pattern layer 3 was coated with the surface protection layer coating solution. The surface protection layer coating solution used was obtained by blending the following ionizing radiation-curable resin with the following particles. • Ionizing radiation-curable resin
Type: trimethylolpropane EO-modified triacrylate (15 mol EO added)
Product name: SR9035 (manufactured by Sartomer)
Blended: 100 parts by mass

### • Particles

Product name: SYLYSIA 250N (manufactured by Fuji Silysia Chemical Ltd.)
Particle size: 5 µm
Blended: 5 parts by mass

The coating film made from the surface protection layer coating solution was formed to a thickness of 5 µm.

The first irradiation step was then performed. Specifically, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 50 mJ/cm². This produced wrinkling on the surface of the coating film.

Subsequently, the second irradiation step was performed. Specifically, the coating film was irradiated with ionizing radiation to cure the entire coating film, thereby forming the surface protection layer 5. In this manner, the decorative sheet 1 was obtained.

### <Comparative Example 1>

The decorative sheet 1 was produced by the same method as in Example 1 except for the following. More specifically, in this example, no particles were contained. In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Comparative Example 2>

The decorative sheet 1 was produced by the same method as in Example 1 except for the following. More specifically, in this example, particles were contained in an amount of 2 parts by mass. In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 90 mJ/cm².

### <Example 2>

The decorative sheet 1 was produced by the same method as in Example 1 except for the following. More specifically, in this example, particles were contained in an amount of 3 parts by mass. In the first irradiation step, at atmospheric pressure, under a nitrogen gas atmosphere having an oxygen concentration of 250 ppm, a Xe excimer lamp was used to irradiate the surface of the coating film made from the surface protection layer coating solution with ultraviolet radiation having a wavelength of 172 nm to an integrated light intensity of 70 mJ/cm².

### <Example 3>

The decorative sheet 1 was produced by the same method as in Example 1 except for the following. More specifically, in this example, particles were contained in an amount of 4 parts by mass. In the first irradiation step, at atmospheric pressure, under a nitrogen gas atmosphere having an oxygen concentration of 400 ppm, a Xe excimer lamp was used to irradiate the surface of the coating film made from the surface protection layer coating solution with ultraviolet radiation having a wavelength of 172 nm to an integrated light intensity of 60 mJ/cm².

### <Example 4>

The decorative sheet 1 was produced by the same method as in Example 1 except for the following. More specifically, in this example, particles were contained in an amount of 10 parts by mass. In the first irradiation step, at atmospheric pressure, under a nitrogen gas atmosphere having an oxygen concentration of 750 ppm, a Xe excimer lamp was used to irradiate the surface of the coating film made from the surface protection layer coating solution with ultraviolet radiation having a wavelength of 172 nm to an integrated light intensity of 40 mJ/cm².

### <Example 5>

The decorative sheet 1 was produced by the same method as in Example 1 except for the following. More specifically, in this example, particles were contained in an amount of 11 parts by mass. In the first irradiation step, at atmospheric pressure, under a nitrogen gas atmosphere having an oxygen concentration of 750 ppm, a Xe excimer lamp was used to irradiate the surface of the coating film made from the surface protection layer coating solution with ultraviolet radiation having a wavelength of 172 nm to an integrated light intensity of 40 mJ/cm².

### <Comparative Example 3>

The decorative sheet 1 was produced by the same method as in Example 1 except for the following. More specifically, in this example, particles were contained in an amount of 12 parts by mass. In the first irradiation step, at atmospheric pressure, under a nitrogen gas atmosphere having an oxygen concentration of 750 ppm, a Xe excimer lamp was used to irradiate the surface of the coating film made from the surface protection layer coating solution with ultraviolet radiation having a wavelength of 172 nm to an integrated light intensity of 40 mJ/cm².

### <Comparative Example 4>

The decorative sheet 1 was produced by the same method as in Example 1 except for the following. More specifically, in this example, the coating film made from the surface protection layer coating solution was formed to a thickness of 1 µm. In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Example 6>

The decorative sheet 1 was produced by the same method as in Example 1 except for the following. More specifically, in this example, the coating film made from the surface protection layer coating solution was formed to a thickness of 2 µm. In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 80 mJ/cm².

### <Example 7>

The decorative sheet 1 was produced by the same method as in Example 1 except for the following. More specifically, in this example, the coating film made from the surface protection layer coating solution was formed to a thickness of 3 µm. In the first irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 70 mJ/cm².

### <Example 8>

The decorative sheet 1 was produced by the same method as in Example 1 except for the following. More specifically, in this example, the coating film made from the surface protection layer coating solution was formed to a thickness of 10 µm. In the first irradiation step, at atmospheric pressure, under a nitrogen gas atmosphere having an oxygen concentration of 700 ppm, a Xe excimer lamp was used to irradiate the surface of the coating film made from the surface protection layer coating solution with ultraviolet radiation having a wavelength of 172 nm to an integrated light intensity of 20 mJ/cm².

### <Example 9>

The decorative sheet 1 was produced by the same method as in Example 1 except for the following. More specifically, in this example, the coating film made from the surface protection layer coating solution was formed to a thickness of 18 µm. In the first irradiation step, at atmospheric pressure, under a nitrogen gas atmosphere having an oxygen concentration of 700 ppm, a Xe excimer lamp was used to irradiate the surface of the coating film made from the surface protection layer coating solution with ultraviolet radiation having a wavelength of 172 nm to an integrated light intensity of 10 mJ/cm².

### <Comparative Example 5>

The decorative sheet 1 was produced by the same method as in Example 1 except for the following. More specifically, in this example, the coating film made from the surface protection layer coating solution was formed to a thickness of 20 µm. In the first irradiation step, at atmospheric pressure, under a nitrogen gas atmosphere having an oxygen concentration of 700 ppm, a Xe excimer lamp was used to irradiate the surface of the coating film made from the surface protection layer coating solution with ultraviolet radiation having a wavelength of 172 nm to an integrated light intensity of 5 mJ/cm².

### <Comparative Example 6>

The decorative sheet 1 was produced by the same method as in Example 1 except for the following. More specifically, in this example, the following particles were used. • Particles
Product name: SYLYSIA 310P (manufactured by Fuji Silysia Chemical, Ltd.)
Particle size: 2 µm

In the first irradiation step, at atmospheric pressure, under a nitrogen gas atmosphere having an oxygen concentration of 600 ppm, a Xe excimer lamp was used to irradiate the surface of the coating film made from the surface protection layer coating solution with ultraviolet radiation having a wavelength of 172 nm to an integrated light intensity of 40 mJ/cm².

### <Example 10>

The decorative sheet 1 was produced by the same method as in Example 1 except for the following. More specifically, in this example, the following particles were used. • Particles
Product name: SYLYSIA 420 (manufactured by Fuji Silysia Chemical, Ltd.)
Particle size: 3 µm

In the first irradiation step, at atmospheric pressure, under a nitrogen gas atmosphere having an oxygen concentration of 550 ppm, a Xe excimer lamp was used to irradiate the surface of the coating film made from the surface protection layer coating solution with ultraviolet radiation having a wavelength of 172 nm to an integrated light intensity of 45 mJ/cm².

### <Example 11>

The decorative sheet 1 was produced by the same method as in Example 1 except for the following. More specifically, in this example, the following particles were used. • Particles
Product name: SYLYSIA 430 (manufactured by Fuji Silysia Chemical, Ltd.)
Particle size: 4 µm

In the first irradiation step, at atmospheric pressure, under a nitrogen gas atmosphere having an oxygen concentration of 550 ppm, a Xe excimer lamp was used to irradiate the surface of the coating film made from the surface protection layer coating solution with ultraviolet radiation having a wavelength of 172 nm to an integrated light intensity of 45 mJ/cm².

### <Example 12>

The decorative sheet 1 was produced by the same method as in Example 1 except for the following. More specifically, in this example, the following particles were used. • Particles
Product name: SYLYSIA 450 (manufactured by Fuji Silysia Chemical, Ltd.)
Particle size: 8 µm

In the first irradiation step, at atmospheric pressure, under a nitrogen gas atmosphere having an oxygen concentration of 400 ppm, a Xe excimer lamp was used to irradiate the surface of the coating film made from the surface protection layer coating solution with ultraviolet radiation having a wavelength of 172 nm to an integrated light intensity of 80 mJ/cm².

### <Example 13>

The decorative sheet 1 was produced by the same method as in Example 1 except for the following. More specifically, in this example, the following particles were used. • Particles
Product name: SYLYSIA 882 (manufactured by Fuji Silysia Chemical, Ltd.)
Particle size: 10 µm

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Example 14>

The decorative sheet 1 was produced by the same method as in Example 1 except for the following. More specifically, in this example, the following particles were used. • Particles
Product name: SYLYSIA 780 (manufactured by Fuji Silysia Chemical, Ltd.)
Particle size: 11 µm

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Example 15>

The decorative sheet 1 was produced by the same method as in Example 1 except for the following. More specifically, in this example, the following particles were used. • Particles
Product name: sicastar 43-00-154 (manufactured by COREFRONT Corporation)
Particle size: 14 µm

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Comparative Example 7>

The decorative sheet 1 was produced by the same method as in Example 1 except for the following. More specifically, in this example, the following ionizing radiation-curable resin was used. • Ionizing radiation-curable resin
Type: trimethylolpropane triacrylate
Product name: NK ESTER A-TMPT (manufactured by SHIN-NAKAMURA CHEMICAL Co., Ltd.)

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Example 16>

The decorative sheet 1 was produced by the same method as in Example 1 except for the following. More specifically, in this example, the following ionizing radiation-curable resin was used. • Ionizing radiation-curable resin
Type: trimethylolpropane EO-modified triacrylate (3 mol EO added)
Product name: Miramer M3130 (manufactured by Miwon Specialty Chemical Co., Ltd.)

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Example 17>

The decorative sheet 1 was produced by the same method as in Example 1 except for the following. More specifically, in this example, the following ionizing radiation-curable resin was used. • Ionizing radiation-curable resin
Type: trimethylolpropane EO-modified triacrylate (6 mol EO added)
Product name: Miramer M3160 (manufactured by Miwon Specialty Chemical Co., Ltd.)

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Example 18>

The decorative sheet 1 was produced by the same method as in Example 1 except for the following. More specifically, in this example, the following ionizing radiation-curable resin was used. • Ionizing radiation-curable resin
Type: trimethylolpropane EO-modified triacrylate (9 mol EO added)
Product name: SR502 (manufactured by Sartomer Company)

In the first irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 80 mJ/cm².

### <Example 19>

The decorative sheet 1 was produced by the same method as in Example 1 except for the following. More specifically, in this example, the following ionizing radiation-curable resin was used. • Ionizing radiation-curable resin
Type: trimethylolpropane EO-modified triacrylate (20 mol EO added)
Product name: NK ESTER AT-20E (manufactured by SHIN-NAKAMURA CHEMICAL Co., Ltd.)

In the first irradiation step, at atmospheric pressure, under a nitrogen gas atmosphere having an oxygen concentration of 600 ppm, a Xe excimer lamp was used to irradiate the surface of the coating film made from the surface protection layer coating solution with ultraviolet radiation having a wavelength of 172 nm to an integrated light intensity of 45 mJ/cm².

### <Example 20>

The decorative sheet 1 was produced by the same method as in Example 1 except for the following. More specifically, in this example, the following ionizing radiation-curable resin was used. • Ionizing radiation-curable resin
Type: ethoxylated pentaerythritol tetraacrylate (20 mol EO added)

In the first irradiation step, at atmospheric pressure, under a nitrogen gas atmosphere having an oxygen concentration of 600 ppm, a Xe excimer lamp was used to irradiate the surface of the coating film made from the surface protection layer coating solution with ultraviolet radiation having a wavelength of 172 nm to an integrated light intensity of 45 mJ/cm².

### <Example 21>

The decorative sheet 1 was produced by the same method as in Example 1 except for the following. More specifically, in this example, the following ionizing radiation-curable resin was used. • Ionizing radiation-curable resin
Type: ethoxylated pentaerythritol tetraacrylate (35 mol EO added)
Product name: NK ESTER ATM-35E (manufactured by SHIN-NAKAMURA CHEMICAL Co., Ltd.)

In the first irradiation step, at atmospheric pressure, under a nitrogen gas atmosphere having an oxygen concentration of 650 ppm, a Xe excimer lamp was used to irradiate the surface of the coating film made from the surface protection layer coating solution with ultraviolet radiation having a wavelength of 172 nm to an integrated light intensity of 40 mJ/cm².

### <Comparative Example 8>

The decorative sheet 1 was produced by the same method as in Example 1 except for the following. More specifically, in this example, particles were contained in an amount of 15 parts by mass. In addition, no first irradiation step was performed, and the coating film made from the surface protection layer coating solution was cured only in the second irradiation step.

### <Comparative Example 9>

The decorative sheet 1 was produced by the same method as in Example 1 except for the following. More specifically, in this example, the following ionizing radiation-curable resin was used. • Ionizing radiation-curable resin
Type: ethylene glycol diacrylate (9 mol EO added)
Product name: Light Acrylate 9EG-A (manufactured by Kyoeisha Chemical Co., Ltd.)

In the first irradiation step, at atmospheric pressure, under a nitrogen gas atmosphere having an oxygen concentration of 550 ppm, a Xe excimer lamp was used to irradiate the surface of the coating film made from the surface protection layer coating solution with ultraviolet radiation having a wavelength of 172 nm to an integrated light intensity of 40 mJ/cm².

### <Comparative Example 10>

The decorative sheet 1 was produced by the same method as in Example 1 except for the following. More specifically, in this example, the following ionizing radiation-curable resin was used. • Ionizing radiation-curable resin
Type: ethoxylated dipentaerythritol hexaacrylate (12 mol EO added)
Product name: NK ESTETR A-DPH-12E (manufactured by SHIN-NAKAMURA CHEMICAL Co., Ltd.)

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Comparative Example 11>

The decorative sheet 1 was produced by the same method as in Example 1 except for the following. More specifically, in this example, the following ionizing radiation-curable resin was used. • Ionizing radiation-curable resin
Type: pentaerythritol tetraacrylate
Product name: NK ESTER A-TMMT (manufactured by SHIN-NAKAMURA CHEMICAL Co., Ltd.)

In the first irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm².

### <Evaluation>

Each of the above decorative sheets was evaluated as follows.

### (1) Thickness of Surface Protection Layer

The thickness of the surface protection layer was measured as follows. The decorative sheet 1 was embedded in a resin such as a cold-setting epoxy resin or a UV curable resin, which was then sufficiently cured. After that, the decorative sheet 1 was cut so that the cross section was exposed, and the cross section was subjected to mechanical polishing to obtain a measurement surface. Subsequently, a scanning electron microscope, SIGMA 500, manufactured by Carl Zeiss Microscopy GmbH, was used to measure the thickness of the surface protection layer. The measurement was performed at 25 random points, and the measurement value obtained by averaging the 25 points was defined as the thickness t of the surface protection layer. The measurement was performed under conditions in which the accelerating voltage was 0.5 keV (low accelerating voltage), the imaging mode was the SE2 mode, and the magnification was 2,000. The measurement sample was not subjected to sputtering. The thickness t of the surface protection layer was equal to the thickness of the coating film made from the surface protection layer coating solution.

### (2) Gloss Level

The gloss level was determined by using Rhopoint IQ (manufactured by Konica Minolta, Inc.) to measure the 60-degree gloss level. In tables 1 to 4 below, "60° GLOSS VALUE" represents the 60-degree gloss level.

### (3) Skin Feel

The skin feel was evaluated by the following method. First, preparations were made to achieve consistency of evaluation criteria among evaluators. Specifically, three standard test pieces having different surface textures were prepared. Next, five blindfolded evaluators were each asked to slide a finger on the surface of each standard test piece while pressing the surface with the finger and then asked to classify the tactile sensation into the following three groups. First group: Although little pressing resistance was felt, there was a feeling of the surface of the decorative sheet adhering to the finger, and also a smooth feel was provided. There was an overall strong impression of a smooth feel. In other words, the sheet felt smooth. Second group: Although little pressing resistance was felt, there was a feeling that the surface of the decorative sheet adhered to the finger. However, there was no impression of a smooth feeling. In other words, the sheet felt moist. Third group: Pressing resistance was felt, and also the presence of irregularities was felt. In other words, the sheet felt rough.

The above procedure was repeated until each evaluator's evaluations matched three or more times in succession and evaluation results among the evaluators matched three times in succession.

Next, for each of the above-described decorative sheets, the evaluators blindfolded were each asked to slide a finger on the surface of the surface protection layer while pressing the surface with the finger and then asked to classify the tactile sensation into the above-mentioned three groups. Then, this procedure was repeated until each evaluator's evaluations matched three or more times in succession and evaluation results among the evaluators matched three times in succession. From these results, the skin tactile sensation was evaluated according to the following criteria. A (smooth): first group
B (moist): second group
C (rough): third group

### (4) Fingerprint Resistance

As an evaluation of fingerprint resistance, an evaluation of fingerprint wipe-off properties was conducted. Specifically, first, the 60-degree gloss level of the surface of the decorative sheets was measured, and the 60-degree gloss level was defined as an initial gloss level. Subsequently, a fingerprint-resistance evaluation solution was adhered onto the surface protection layer and the fingerprint-resistance evaluation solution adhered to the surface of the decorative sheet was wiped off. Here, as the fingerprint-resistance evaluation solution, a higher fatty acid was used. Thereafter, the 60-degree gloss level of the part from which the fingerprint-resistance evaluation solution had been wiped off was measured, and the 60-degree gloss level was defined as a post-wipe-off gloss level.

The fingerprint wipe-off rate was calculated from the following equation: Fingerprint wipe-off rate (%) = (post-wipe-off gloss level/initial gloss level) × 100

The evaluation criteria were as follows. AA: 70% or more and less than 250%
A: 50% or more and less than 70%, or 250% or more and less than 300%
B: less than 50% or 300% or more

### (5) Contamination Resistance

The Contaminant A test defined in Japanese Agricultural Standards (JAS) was conducted for an evaluation of contamination resistance. More specifically, 10 mm wide lines were drawn with blue ink, quick-drying black ink, and red crayon on the surface protection layer of each decorative sheet and left for four hours. After that, the blue ink, quick-drying black ink, and red crayon lines were wiped with a cloth moistened with ethanol.

The evaluation criteria were as follows. AA: all the color lines could be easily wiped off. A: part of the color lines could be wiped off but stains were partially left. B: the color lines could not be wiped off.

### (6) Scratch Resistance

The decorative sheets were each bonded to a wooden substrate B using a urethane-based adhesive. Then, a stainless steel wool rubbing test was conducted for an evaluation of scratch resistance. Specifically, the decorative sheet was rubbed for 20 strokes with steel wool at a load of 100 g and checked by visual inspection for scratches or change in gloss that occurred on the surface of the decorative sheet.

The evaluation criteria were as follows. AA: neither scratches nor change in gloss occurred on the surface A: slight scratches and/or change in gloss occurred on the surface B: severe scratches and/or change in gloss occurred on the surface

### (7) Processability

The decorative sheets obtained were each bonded to a wooden substrate B using a urethane-based adhesive, with the surface nearer to the primary film layer (that is, the rear surface of the decorative sheet) facing the wooden substrate B. Then, a V-shaped groove was made to the bonding boundary between the wooden substrate B and the decorative sheet in such a manner as not to damage the decorative sheet.

Next, the wooden substrate B was bent to 90 degrees along the V-shaped groove so that the surface of the decorative sheet nearer to the surface protection layer (that is, the front surface of the decorative sheet) was folded in a mountain fold. The bent part of the front surface of the decorative sheet was examined with an optical microscope for whitening or a crack to evaluate bending workability.

The evaluation criteria were as follows: AA: neither whitening nor cracks found A: whitening found in some part B: whitening found in entire surface or cracks found in some part

### (8) Section Height Difference Rdc and Ratio Rdc/t

The section height difference Rdc (µm) and the ratio Rdc/t were determined as described above in Detailed Description.

The evaluation results are listed in tables 1 to 4. In tables 1 to 4, a skin feel evaluation result of A (smooth) is represented by entering the character Y in an "A (SMOOTH)" cell, a skin feel evaluation result of B (moist) is represented by entering the character Y in a "B (MOIST)" cell, and a skin feel evaluation result of C (rough) is represented by entering the character Y in a "C (ROUGH)" cell.

**[Table 1]**

| | | | Ex. 1 | Comp. Ex. 1 | Comp. Ex. 2 | Ex. 2 | Ex. 3 | Ex. 4 | Ex. 5 | Comp. Ex. 3 |
|---|---|---|---|---|---|---|---|---|---|---|
| First irradiation step performed? | | | Yes | Yes | Yes | Yes | Yes | Yes | Yes | Yes |
| Surface shape | | | Ridged | Ridged | Ridged | Ridged | Ridged | Ridged | Ridged | Ridged |
| Section height difference | | Rdc | 0.70 | 1.83 | 1.03 | 0.92 | 0.86 | 0.63 | 0.59 | 0.53 |
| | | Rdc/t | 0.14 | 0.37 | 0.21 | 0.18 | 0.17 | 0.13 | 0.12 | 0.11 |
| Thickness (µm) | | | 5 | 5 | 5 | 5 | 5 | 5 | 5 | 5 |
| Acrylic resin | Number of functional groups | | 3 | 3 | 3 | 3 | 3 | 3 | 3 | 3 |
| | Repeating structure | Unit | C2h4o | C2h4o | C2h4o | C2h4o | C2h4o | C2h4o | C2h4o | C2h4o |
| | | Number of repeats | 15 | 15 | 15 | 15 | 15 | 15 | 15 | 15 |
| Additive | Particle size (µm) | | 5 | - | 5 | 5 | 5 | 5 | 5 | 5 |
| | Content (parts by mass) | | 5 | 0 | 2 | 3 | 4 | 10 | 11 | 12 |
| 60° gloss value | | | 2.4 | 3.8 | 3.3 | 3.1 | 2.8 | 2.4 | 2.3 | 2.2 |
| Fingerprint resistance | | | Aa | Aa | Aa | Aa | Aa | Aa | A | A |
| Contamination resistance | | Contaminant A | Aa | Aa | Aa | Aa | Aa | Aa | A | B |
| Scratch resistance | | Steel | Aa | Aa | Aa | Aa | Aa | Aa | A | B |
| Processability | V cut | | Aa | Aa | Aa | Aa | Aa | Aa | A | B |
| Skin feel | A (smooth) | | | | | | | | | |
| | B (moist) | | Y | | | Y | Y | Y | Y | Y |
| | C (rough) | | | Y | Y | | | | | |

**[Table 2]**

| | | | Comp. Ex. 4 | Ex. 6 | Ex. 7 | Ex. 8 | Ex. 9 | Comp. Ex. 5 | Comp. Ex. 6 | Ex. 10 |
|---|---|---|---|---|---|---|---|---|---|---|
| First irradiation step performed? | | | Yes | Yes | Yes | Yes | Yes | Yes | Yes | Yes |
| Surface shape | | | Ridged | Ridged | Ridged | Ridged | Ridged | Ridged | Ridged | Ridged |
| Section height difference | | Rdc | 0.08 | 0.21 | 0.41 | 1.37 | 3.50 | 4.20 | 1.09 | 0.97 |
| | | Rdc/t | 0.08 | 0.11 | 0.14 | 0.14 | 0.19 | 0.21 | 0.22 | 0.19 |
| Thickness (µm) | | | 1 | 2 | 3 | 10 | 18 | 20 | 5 | 5 |
| Acrylic resin | Number of functional groups | | 3 | 3 | 3 | 3 | 3 | 3 | 3 | 3 |
| | Repeating structure | Unit | C2h4o | C2h4o | C2h4o | C2h4o | C2h4o | C2h4o | C2h4o | C2h4o |
| | | Number of repeats | 15 | 15 | 15 | 15 | 15 | 15 | 15 | 15 |
| Additive | Particle size (µm) | | 5 | 5 | 5 | 5 | 5 | 5 | 2 | 3 |
| | Content (parts by mass) | | 5 | 5 | 5 | 5 | 5 | 5 | 5 | 5 |
| 60° gloss value | | | 9.5 | 7.8 | 4.8 | 1.2 | 1.1 | 1 | 2.5 | 2.4 |
| Fingerprint resistance | | | Aa | Aa | Aa | Aa | Aa | Aa | Aa | Aa |
| Contamination resistance | | Contaminant A | Aa | Aa | Aa | Aa | Aa | Aa | Aa | Aa |
| Scratch resistance | Steel | | A | Aa | Aa | Aa | Aa | Aa | Aa | Aa |
| Processability | V cut | | Aa | Aa | Aa | Aa | A | A | Aa | Aa |
| Skin feel | A (smooth) | | Y | | | | | | | |
| | B (moist) | | | Y | Y | Y | Y | | | Y |
| | C (rough) | | | | | | | Y | Y | |

**[Table 3]**

| | | | Ex. 11 | Ex. 12 | Ex. 13 | Ex. 14 | Ex. 15 | Comp. Ex. 7 | Ex. 16 | Ex. 17 |
|---|---|---|---|---|---|---|---|---|---|---|
| First irradiation step performed? | | | Yes | Yes | Yes | Yes | Yes | Yes | Yes | Yes |
| Surface shape | | | Ridged | Ridged | Ridged | Ridged | Ridged | Irregular due to particles | Ridged | Ridged |
| Section height difference | | Rdc | 0.92 | 0.86 | 0.78 | 0.73 | 0.70 | 0.42 | 0.57 | 0.67 |
| | | Rdc/t | 0.18 | 0.17 | 0.16 | 0.15 | 0.14 | 0.04 | 0.11 | 0.13 |
| Thickness (µm) | | | 5 | 5 | 5 | 5 | 5 | 5 | 5 | 5 |
| Acrylic resin | Number of functional groups | | 3 | 3 | 3 | 3 | 3 | 3 | 3 | 3 |
| | Repeating structure | Unit | C2h4o | C2h4o | C2h4o | C2h4o | C2h4o | N/a | C2h4o | C2h4o |
| | | Number of repeats | 15 | 15 | 15 | 15 | 15 | 0 | 3 | 6 |
| Additive | Particle size (µm) | | 4 | 8 | 10 | 11 | 14 | 5 | 5 | 5 |
| | Content (parts by mass) | | 5 | 5 | 5 | 5 | 5 | 5 | 5 | 5 |
| 60° gloss value | | | 2.3 | 2.3 | 2.1 | 1.9 | 1.7 | 14 | 3.9 | 3.5 |
| Fingerprint resistance | | | Aa | Aa | Aa | A | A | B | Aa | Aa |
| Contamination resistance | Contaminant A | | Aa | Aa | Aa | A | A | Aa | Aa | Aa |
| Scratch resistance | Steel | | Aa | Aa | Aa | A | B | Aa | Aa | Aa |
| Processability | V cut | | Aa | Aa | Aa | A | A | B | A | Aa |
| Skin feel | A (smooth) | | | | | | | Y | | |
| | B (moist) | | Y | Y | Y | Y | Y | | Y | Y |
| | C (rough) | | | | | | | | | |

**[Table 4]**

| | | | Ex. 18 | Ex. 19 | Ex. 20 | Ex. 21 | Comp. Ex. 8 | Comp. Ex. 9 | Comp. Ex. 10 | Comp. Ex. 11 |
|---|---|---|---|---|---|---|---|---|---|---|
| First irradiation step performed? | | | Yes | Yes | Yes | Yes | No | Yes | Yes | Yes |
| Surface shape | | | Ridged | Ridged | Ridged | Ridged | Irregular due to particles | Ridged | Irregular due to particles | Irregular due to particles |
| Section height difference | | Rdc | 0.82 | 0.95 | 0.53 | 0.96 | 0.72 | 1.12 | 0.45 | 0.43 |
| | | Rdc/t | 0.16 | 0.19 | 0.11 | 0.19 | 0.14 | 0.22 | 0.09 | 0.09 |
| Thickness (µm) | | | 5 | 5 | 5 | 5 | 5 | 5 | 5 | 5 |
| Acrylic resin | Number of functional groups | | 3 | 3 | 4 | 4 | 3 | 2 | 6 | 4 |
| | Repeating structure | Unit | C2h4o | C2h4o | C2h4o | C2h4o | C2h4o | C2h4o | C2h4o | N/a |
| | | Number of repeats | 9 | 20 | 20 | 35 | 15 | 9 | 12 | 0 |
| Additive | Particle size (µm) | | 5 | 5 | 5 | 5 | 5 | 5 | 5 | 5 |
| | Content (parts by mass) | | 5 | 5 | 5 | 5 | 15 | 5 | 5 | 5 |
| 60° gloss value | | | 3.1 | 2.3 | 8.8 | 2.2 | 10 | 3 | 12 | 18 |
| Fingerprint resistance | | | Aa | Aa | Aa | Aa | B | Aa | B | B |
| Contamination resistance | Contaminant A | | Aa | Aa | Aa | Aa | B | Aa | Aa | Aa |
| Scratch resistance | Steel | | Aa | A | Aa | A | B | B | Aa | Aa |
| Processability | V cut | | Aa | Aa | A | Aa | Aa | Aa | B | B |
| Skin feel | A (smooth) | | | | | | | | Y | Y |
| | B (moist) | | Y | Y | Y | Y | Y | | | |
| | C (rough) | | | | | | | Y | | |

As listed in tables 1 to 4, the decorative sheets according to Examples 1 to 21 provided the evaluators with a moist feel. The decorative sheets according to Examples 1 to 21 had low gloss, high fingerprint resistance, high contamination resistance, and high processability. Furthermore, the decorative sheets according to Examples 1 to 14 and 16 to 21 also had high scratch resistance.

Although the decorative sheet in Comparative Example 3, as listed in table 1, provided the evaluators with a moist feel and had low gloss, the contamination resistance, scratch resistance, and processability were poor. Although the decorative sheet in Comparative Example 8, as listed in table 4, provided the evaluators with a moist feel, the gloss level was high, and the fingerprint resistance, contamination resistance, and scratch resistance were poor.

In addition, as listed in tables 1, 2, and 4, the decorative sheets in Comparative Examples 1, 2, 5, 6, and 9 provided the evaluators not with a moist feel, but a rough feel. Further, as listed in tables 2 to 4, the decorative sheets in Comparative Examples 4, 7, 10, and 11 provided the evaluators not with a moist feel, but a smooth feel.

### [Reference Signs List]

- 1: Decorative sheet
- 2: Primary film layer
- 3: Pattern layer
- 4: Transparent resin layer
- 5: Surface protection layer
- 6: Primer layer
- 7: Adhesive layer
- 8: Concealing layer
- 11: Decorative material
- B: Substrate

## Claims

1. A decorative sheet comprising:
a primary film layer; and
a surface protection layer disposed on one surface of the primary film layer, wherein
the surface protection layer has a surface provided with an irregular structure having a plurality of ridged portions protruding in a ridged shape,
the irregular structure of the surface protection layer has a ratio of a section height difference Rdc to a thickness t of the surface protection layer, the ratio Rdc/t being 0.1 or greater and 0.2 or less,
the thickness t of the surface protection layer is 2 µm or more and 18 µm or less,
the surface protection layer contains a cured product of a resin and particles, with the particles having an average particle size of 3 µm or more and the particles contained in the surface protection layer in an amount of 3 parts by mass or more and 11 parts by mass or less with respect to 100 parts by mass of the resin, and
the surface protection layer has a gloss level less than 10.

2. The decorative sheet according to claim 1, wherein
the average particle size of the particles is 3 µm or more and 11 µm or less.

3. The decorative sheet according to claim 1 or 2, wherein
the resin is an ionizing radiation-curable resin.

4. The decorative sheet according to any one of claims 1 to 3, wherein
the resin is an acrylate.

5. The decorative sheet according to any one of claims 1 to 4, wherein
the resin is trifunctional acrylate having a repeating structure, and the repeating structure has 3 or more and 20 or less repeats.

6. The decorative sheet according to any one of claims 1 to 4, wherein
the resin is tetrafunctional acrylate having a repeating structure, and the repeating structure has 20 or more and 35 or less repeats.

7. The decorative sheet according to any one of claims 1 to 6, further comprising:
a pattern layer between the primary film layer and the surface protection layer.

8. A decorative material comprising:
the decorative sheet according to any one of claims 1 to 7; and
a substrate to which the decorative sheet is bonded.
